# EUROPÄISCHE PATENTANMELDUNG

(11) **EP 1 401 089 A1**
(43) Veröffentlichungstag der Anmeldung: **24.03.2004**
(21) Anmeldenummer: 02020893.0
(22) Anmeldetag: 18.09.2002
(51) Int. Cl.: H02K 11/04

(54) **Elektrische Maschine, ausgebildet als Starter, Generator oder Starter-Generator für ein Kraftfahrzeug**

(71) Anmelder: Continental ISAD Electronic Systems GmbH & Co. KG, 86899 Landsberg (DE)
(72) Erfinder: Schmid, Ralf, 87662 Kaltental (DE); Schmidt, Marco, 81241 München (DE)
(74) Vertreter: Lippich, Wolfgang, Dipl.-Phys, Dr.rer.nat.

(57) **Zusammenfassung**

Die Erfindung betrifft eine elektrische Maschine, die als Starter, Generator oder als Starter-Generator für ein Kraftfahrzeug ausgebildet ist, mit einem Ständer, der folgendes aufweist: eine Wicklung (2), längs des Umfangs des Ständers (17) verteilt angeordnete Leistungselektronikeinheiten (5) mit Leistungsschaltern (8), dadurch gekennzeichnet, daß die elektrische Maschine (1) so ausgebildet ist, daß in ihr ein Drehfeld durch Mehrphasenstrom erzeugt wird, die Wicklung (2) hierfür mehrere Phasenteilwicklungen (6u, 6v, 6w) aufweist, wobei jede Phasenteilwicklung (6u, 6v, 6w) durch wenigstens zwei Spulen gebildet wird, und wobei jeder Phasenteilwicklung (6u, 6v, 6w) wenigstens zwei der am Ständerumfang angeordneten Leistungselektronikeinheiten (5) zugeordnet sind, die gesondert mit verschiedenen der Spulen (3) der Phasenteilwicklung (6u, 6v, 6w) oder verschiedenen Gruppen (3') von Spulen der Phasenteilwicklung (6u, 6v, 6w) elektrisch verbunden sind, so daß durch eine Leistungselektronikeinheit (5) nur ein Teilstrom des Stroms für eine Phase fließt. Die Erfindung ist außerdem auf eine elektrische Maschine gerichtet, die dadurch gekennzeichnet ist, daß die Wicklung (2) Verbindungsköpfe (19) aufweist, und die Leistungselektronikeinheiten (5) stirnseitig im Ständer (17) in einem von den Verbindungsköpfen (19) freigelassenen Raum (20), der radial außerhalb oder innerhalb der Verbindungsköpfe (19) liegt, angeordnet sind.

## Beschreibung

Die Erfindung betrifft allgemein elektrische Maschinen, die als Starter, Generator oder Starter-Generator für ein Kraftfahrzeug ausgebildet sind, und insbesondere eine solche elektrische Maschine, die einen Ständer mit einer Wicklung und längs des Umfangs des Ständers verteilt angeordnete Leistungselektronikeinheiten mit Leistungsschaltern aufweist.

Eine elektrische Maschine dieser Art ist aus der DE 199 45 368 A1 bekannt. Im Inneren eines Statorträgers einer (dort nicht näher beschriebenen) elektrischen Maschine sind fünf Leistungselektronik-Module angeordnet, welche außer mit Leistungshalbleitern mit Ansteuerelektronik und Kondensatoren ausgerüstet sind. Diese Anordnung soll der Kühlung der Elektronik über die Wandung des Statorträgers dienen. Die Leistungshalbleiter der Leistungselektronikmodule sind hierzu unter Zwischenschaltung eines elektrischen Isolators auf Kühlkörpern angebracht, die wiederum thermisch mit dem Statorträger gekoppelt sind.

Ein kombinierter Starter-Generator für ein Kraftfahrzeug ist beispielsweise aus der WO 97/08456 bekannt. Hierbei handelt es sich um eine sog. Kurbelwellenmaschine, d.h. eine Maschine, die ohne eigenes Lager auf der Kurbelwelle eines Verbrennungsmotors sitzt, und zwar z.B. an derjenigen Stelle, an der sich bei Kraftfahrzeugen mit Schaltgetriebe die Kupplung bzw. bei solchen mit Automatikgetriebe die sog. Flexplatte befindet. Die beschriebene elektrische Maschine ist eine Drehfeldmaschine mit drei Phasen. Die zu deren Speisung erforderlichen Drei-Phasen-Wechselspannungen werden mit Hilfe eines Wechselrichters erzeugt, der ausgehend von einer sog. Zwischenkreis-Gleichspannung mit Hilfe elektronischer Leistungsschalter die erforderlichen Spannungen erzeugt. Dies geschieht durch Pulsweitenmodulation, die so bewertet ist, daß die pulsmodulierte Spannung im Mittel der gewünschten Wechselspannung in Amplitude, Frequenz und Phase entspricht. Die Wicklung der elektrischen Maschine wirkt aufgrund ihrer Induktivität als Tiefpaß, so daß die durch diese fließenden Ströme näherungsweise den gewünschten Drei-Phasen-Wechselströmen entsprechen. Für jede Phase können mehrere dieser Leistungsschalter imWechselrichter parallel geschaltet sein. Die Leistungselektronik befindet sich in einem von der Maschine gesonderten Gehäuse, in dem die Leistungsschalter siedebadgekühlt sind. Zur Verbindung des Wechselrichters mit der elektrischen Maschine dient bei solchen Anlagen in der Regel ein für die hohen Ströme geeignet dimensioniertes dreisträngiges Verbindungskabel.

Aus der WO 01/95461 A1 ist eine für einen Starter-Generator geeignete Formteilwicklung bekannt. Diese wird dadurch hergestellt, daß L- (und zum Teil auch U-) förmige Formteile in Nuten des Ständers lagenweise eingelegt und verschweißt werden. Die Wicklung ist ebenfalls für Speisung mit Dreiphasenstrom ausgelegt, weist also drei Phasenteilwicklungen auf. Jede Phasenteilwicklung ist wiederum durch eine Parallelschaltung mehrerer Spulen gebildet. Stirnseitig am Ständer verlaufende Leiter, welche jeweils die beiden Seiten einer Spule verbinden, bilden sog. Verbindungsköpfe. Diese sind bei dieser Art von Formteilwicklung sehr kompakt ausgebildet. Radial außerhalb der Verbindungsköpfe verlaufen drei ringförmige Stromschienen, an welche die jeweils parallel geschalteten Wicklungen der jeweils zugehörigen Phasenteilwicklung angeschlossen sind. Die Stromschienen sind an eine externe Drehstromquelle anzuschließen.

Aus der DE 198 26 731 A1 ist eine Halbbrückenbaugruppe zur Bildung von Wechselrichtern für die Speisung von Drehfeldmaschinen bekannt. Bei einer Halbbrückenschaltung sind wenigstens zwei Halbleiterschalter unter Bildung einer sog. Halbbrücke in Serie geschaltet. Mehrere solcher Serienschaltungen sind wiederum parallel geschaltet. Die Halbleiterschalter (MOSFETs) sind mit ihren Source-Anschlüssen auf metallische Leiterschienen gelötet.

Die vorliegende Erfindung ist gemäß einem ersten Aspekt auf eine elektrische Maschine gerichtet, die als Starter, Generator oder als Starter-Generator für ein Kraftfahrzeug ausgebildet ist. Die Maschine hat einen Ständer, der eine Wicklung und längs des Umfangs des Ständers verteilt angeordnete Leistungselektronikeinheiten mit Leistungsschaltern aufweist. Sie ist so ausgebildet, daß in ihr ein Drehfeld durch Mehrphasenstrom erzeugt wird. Hierfür weist die Wicklung mehrere Phasenteilwicklungen auf. Jede Phasenteilwicklung wird durch wenigstens zwei Spulen gebildet. Jeder Phasenteilwicklung sind wenigstens zwei der am Ständerumfang angeordneten Leistungselektronikeinheiten zugeordnet, die gesondert mit verschiedenen der Spulen der Phasenteilwicklung oder verschiedenen Gruppen der Spulen der Phasenteilwicklung elektrisch verbunden sind. Durch eine Leistungselektronikeinheit fließt so nur ein Teilstrom des Stroms für eine Phase.

Gemäß einem zweiten Aspekt ist die Erfindung auf eine auf eine elektrische Maschine gerichtet, die als Starter, Generator oder als Starter-Generator für ein Kraftfahrzeug ausgebildet ist. Die Maschine hat einen Ständer, der eine Wicklung und längs des Umfangs des Ständers verteilt angeordnete Leistungselektronikeinheiten mit Leistungsschaltern aufweist. Die Wicklung weist Verbindungsköpfe auf. Die Leistungselektronikeinheiten sind stirnseitig im Ständer in einem von den Verbindungsköpfen freigelassenen Raum, der radial außerhalb oder innerhalb der Verbindungsköpfe liegt, angeordnet.

Die Erfindung wird nun anhand von bevorzugten beispielhaften Ausführungsformen und der angefügten beispielhaften Zeichnung näher erläutert. In der Zeichnung zeigen:
- Fig. 1: ein Diagramm, welches die Erzeugung eines angenähert sinusförmigen Stroms mit Hilfe einer getakteten Spannung veranschaulicht;
- Fig. 2: Spannungsverläufe bei einem Dreiphasensystem;
- Fig. 3: ein Schaltschema einer Drehfeldmaschine mit verteilten Leistungselektronikeinheiten;
- Fig. 4: ein anderes Ausführungsbeispiel ähnlich Fig. 3, das jedoch statt Spulen Spulengruppen aufweist;
- Fig. 5: eine Schnittansicht eines Ständers mit Leistungselektronikeinheit,
- Fig. 6: eine vergrößerte Schnittansicht der Leistungselektronikeinheit von Fig. 5;
- Fig. 7: eine Draufsicht (des Leistungsteils) der Leistungselektronikeinheit von Fig. 5 und 6;
- Fig. 8: eine perspektivische Ansicht einer vormontierten Leistungselektronik-Baugruppe;
- Fig. 9: eine perspektivische Ansicht eines (geöffneten) Ständers mit eingesetzter Leistungselektronik-Baugruppe von Fig. 8;
- Fig. 10: eine perspektivische Ansicht eines Ständerausschnitts einer elektrischen Maschine mit Nuten, in die L-förmige Formteile eingesetzt sind;
- Fig. 11: ein Wickelschema einer beispielhaften Drehfeldwicklung;
- Fig. 12: eine stark schematisch vereinfachte Darstellung eines Kraftfahrzeug-Antriebssystems mit einer als Starter-Generator ausgebildeten elektrischen Maschine

In den Figuren sind funktionsgleiche oder -ähnliche Teile zum Teil mit gleichen Bezugszeichen gekennzeichnet.

Bevor die Figuren näher erläutert werden, folgen zunächst einige Anmerkungen zu den bevorzugten Ausführungsformen.

Bei den bevorzugten Ausführungsformen dienen die Leistungsschalter der Leistungselektronikeinheiten dazu, aus einer Versorgungs-Gleichspannung eine (effektive) Wechselspannung zu erzeugen, welche die für das gewünschte Drehfeld geeignete Frequenz, Amplitude und Phase hat. Dies geschieht dadurch, daß die Leistungsschalter mit einer Taktfrequenz, die groß (z.B. 5 bis 100 kHz) gegenüber der Drehfrequenz des Drehfelds (typischerweise 10 bis 100 s⁻¹ beim Kraftfahrzeug) ist, ein- und ausgeschaltet werden, wobei die Pulse entsprechend der gewünschten Wechselspannung moduliert werden. Beispielsweise bei Pulsweitenmodulation erfolgt die sog. Bewertung der Modulation so, daß die pulsmodulierte Spannung im zeitlichen Mittel im wesentlichen der gewünschten Wechselspannung entspricht. Wie bereits oben erwähnt wurde, wirkt die elektrische Maschine aufgrund ihrer Induktivität als Tiefpaß, so daß die durch die Wicklung fließenden Ströme näherungsweise den gewünschten Wechselströmen entsprechen.

Zur Erzeugung der Drehfelder dienen Mehrphasenspannungen und -ströme. Am einfachsten und daher am häufigsten verwendet ist das Dreiphasensystem, bei dem die Phasendifferenz zwischen den einzelnen Phasen 120° beträgt. Wenn eine besonders hohe Gleichförmigkeit der Drehfelder gewünscht ist, können auch Systeme mit höherer Phasenzahl, z.B. 5, 7, 12 Phasen, und entsprechend kleinerer Phasendifferenz Anwendung finden.

Damit die Wicklung bei Speisung mit Mehrphasenstrom das gewünschte Drehfeld erzeugt, ist sie aus Phasenteilwicklungen aufgebaut, und zwar jeweils einer Phasenteilwicklung pro Phase. Der Begriff "Teilwicklung" zielt nicht etwa auf eine räumliche Aufteilung der Wicklung in einander gesonderte Sektoren ab, denn i.a. überlappen sich die verschiedenen Phasenteilwicklungen in räumlicher Hinsicht. Vielmehr faßt der Begriff "Phasenteilwicklung" in elektrisch-funktioneller Hinsicht diejenigen Spulen einer Wicklung zusammen, welche zu einer Phase gehören, also von Strömen mit im wesentlichen gleichen Phasenwinkel durchflossen werden. Bei herkömmlichen Wicklungen sind sämtliche Spulen einer Phasenteilwicklung in der Regel einfach in Serie und/oder parallel verdrahtet, so daß hierfür üblicherweise der Begriff "Strang" verwendet wird. Da aber - wie unten noch ausführlich erläutert wird - bei den bevorzugten Ausführungsformen keine derartige verdrahtete Parallelschaltung der zu einer Phase gehörenden Spulen vorliegt, wird hier statt "Strang" der Begriff "Phasenteilwicklung" verwendet.

Bei den bevorzugten Ausführungsformen ist die Wicklung aus Spulen aufgebaut, also wendelförmigen Gebilden, bei denen die Wendelachse im wesentlichen in Radialrichtung orientiert ist. Im Zusammenhang mit der vorliegenden Erfindung und den Ausführungsbeispielen wird unter dem Begriff "Spule" auch eine Serienschaltung solcher Spulen (die dann als "Teilspulen" bezeichnet werden) verstanden. Beispielsweise ist für ein einfaches Anschließen von Spulen eine Serienschaltung vorteilhaft, bei der eine Teilspule z.B. von radial außen nach radial innen geführt und dort mit einer anderen, von radial innen nach radial außen führenden Teilspule verbunden ist, wie es in der genannten WO 01/95461 A1 näher beschrieben ist.

Bei den bevorzugten Ausführungsformen wird jede Phasenteilwicklung durch wenigstens zwei Spulen gebildet. Für eine herkömmliche Wicklung - bei der, wie oben ausgeführt wurde, i.a. sämtliche Spulen einer Phasenteilwicklung fest miteinander verdrahtet sind - würde dies bedeuten, daß in jedem Strang eine Parallelschaltung von Spulen vorliegt. Bei den bevorzugten Ausführungsformen sind die genannten Spulen aber - wie unten näher erläutert wird - nicht parallel miteinander verdrahtet; nur im funktionellen Sinn kann man diese Spulen als parallel geschaltet betrachten. Im übrigen gibt es Ausführungsformen, bei denen zwar nicht sämtliche Spulen einer Phasenteilwicklung, aber einzelne dieser Spulen parallel verdrahtet sind. Diese werden hier als "Gruppen von Spulen" bezeichnet. Sind beispielsweise bei einer Phasenteilwicklung mit insgesamt sechs Spulen jeweils zwei parallel verdrahtet, so handelt es sich um eine Phasenteilwicklung mit drei Gruppen von Spulen.

Bei den bevorzugten Ausführungsformen sind jeder Phasenteilwicklung wenigstens zwei Leistungselektronikeinheiten zugeordnet. Diese sind jeweils gesondert mit einer Spule oder einer Gruppe von Spulen der Phasenteilwicklung elektrisch verbunden. Durch eine Leistungselektronikeinheit fließt also nur ein Teilstrom des Stroms für eine Phase. Bei den bevorzugten Ausführungsformen handelt es sich bei diesem Teilstrom um denjenigen Strom, der durch die Spule bzw. Gruppe von Spulen fließt, der die Leistungselektronikeinheit zugeordnet ist. Besonders bevorzugt sind diejenigen Ausführungsformen, bei denen sämtliche Spulen mit einer eigenen Leistungselektronikeinheit ausgerüstet sind, es also keine parallel verdrahteten Spulen (d.h. keine Gruppe von Spulen) geschaltet.

Die Ständerwicklung einer Drehfeldmaschine weist im allgemeinen "Verbindungsköpfe" auf, die bei herkömmlichen Drahtwicklungen üblicherweise als "Wickelköpfe" bezeichnet werden. Bei einer bevorzugten Radialfeldmaschine mit einem durch ein Blechpaket gebildeten Ständerkörper liegen die Verbindungsköpfe auf dessen beiden Stirnseiten axial außerhalb des Ständerkörpers. Es handelt sich bei ihnen um Bündel von Leitern, welche jeweils die beiden, in einer Nut des Blechpakets liegenden Seiten einer Spule verbinden. Wenn der - oben bereits erwähnte - Fall einer überlappenden Anordnung von Spulen gegeben ist, so verlaufen im Verbindungskopf jeweils Verbindungsleiter, die zu mehreren Spulen gehören. Diese müssen in geeigneter Weise aneinander vorbeigeführt werden.

Hierfür gibt es verschiedene bekannte Möglichkeiten: Bei herkömmlichen Drahtwicklungen wird die Wicklung spulenweise gewickelt; die Verbindungsleiter einer Spule werden jeweils zu einem Bündel zusammengefaßt, und die zu den überlappenden Spulen gehörenden Bündel werden aneinander vorbeigeführt, indem sie einander in Radialrichtung und/oder in Axialrichtung ausweichen. In der DE 100 55 750 A1 ist eine solche Lösung für Formteilwicklungen vorgeschlagen worden. Einen anderen Verbindungskopfaufbau erhält man bei Wicklungen, die nicht spulenweise, sondern lagenweise aufgebaut werden, gemäß der eingangs genannten WO 01/95461 A1. Bei einem solchen Aufbau sind die Verbindungsleiter der überlappenden Spulen miteinander verkämmt angeordnet.

Bei beiden Lösungen läßt es sich einrichten, daß im Ständer ein z.B. ringförmiger Raum von den Verbindungsköpfen freigelassen wird. Dieser liegt stirnseitig in dem Bereich des Ständerkörpers, wo dieser keine Nuten aufweist, also in der Höhe eines Ständerrückens, der für magnetischen Rückfluß sorgt. Bei (hier besonders bevorzugten) Innenläufermaschinen liegt dieser Raum radial außerhalb der Verbindungsköpfe, bei Außenläufermaschinen (die fortan nicht mehr erwähnt werden, aber gleichwohl umfaßt sind) hingegen innerhalb der Verbindungsköpfe. Bei den bevorzugten Ausführungsformen wird nun dieser von den Verbindungsköpfen freigelassene Raum zur Aufnahme der längs des Umfangs verteilten Leistungselektronikeinheiten genutzt. Diese können somit in unmittelbarrer Nähe der Verbindungsköpfe - und damit der Spulenenden - der ihnen zugeordneten Spulen angeordnet sein.

Bei den im folgenden näher geschilderten bevorzugten Ausführungsformen sind die vorteilhaften Maßnahmen einer Ausrüstung von wenigstens zwei Spulen bzw. Spulengruppen einer Phasenteilwicklung mit je einer Leistungselektronikeinheit sowie deren Anordnung in dem von den Verbindungsköpfen freigelassenen Raum miteinander kombiniert. Dies ist besonders vorteilhaft, jedoch nicht zwingend. Beispielsweise kann es bei herkömmlichen Drahtwicklungen oder spulenweise aufgebauten Formteilwicklungen entsprechend der DE 100 55 750 A1 vorteilhaft sein, die Verbindungsköpfe auch in dem Raum vor dem Ständerrücken anzuordnen, da sich bei diesen Wicklungstypen die Verbindungsleiterbündel der einzelnen Spulen ohnehin radial ausweichen müssen. Die Leistungselektronikeinheiten können dann an anderer Stelle des Läuferumfangs angeordnet sein, beispielsweise am Außenumfang oder stirnseitig auf den Verbindungsköpfen. Umgekehrt sind auch Ausführungsformen vorteilhaft, bei denen jeder Phasenteilwicklung nur eine Leistungselektronikeinheit zugeordnet ist, diese Leistungselektronikeinheiten gleichwohl aber stirnseitig im Ständer in dem genannten, von den Verbindungsköpfen freigelassenen Raum angeordnet sind.

Obgleich bevorzugte Ausführungsformen auch Drahtwicklungen aufweisen können, haben die besonders bevorzugten Ausführungsformen eine Formteilwicklung, vorzugsweise von dem in WO 01/95461 A1 beschriebenen Typ, bei welchem überlappende Spulen der Wicklung lagenweise aus einzelnen Formteilen zusammengesetzt sind und somit aus geschichteten Formteil-Verbindungsleitern gebildete Verbindungsköpfe aufweisen, in denen die Verbindungsleiter mehrere Spulen miteinander verkämmt verlaufen. Zu diesem Zweck sind die Formteile im Verbindungsleiterbereich flacher als in den Nuten. Solche Verbindungsköpfe erstrecken sich vom Ständerkörper in Axialrichtung nach außen, und lassen somit den genannten, radial außerhalb oder innerhalb liegenden Freiraum zur Anordnung der Leistungselektronikeinheiten.

Aus der eingangs genannten WO 01/95461 A1 ist es bekannt, den Ständer einer Drehstrommaschine mit Wechselstromschienen auszurüsten, welche den vom gesonderten Wechselrichter erzeugten Mehrphasen-Wechselstrom den parallel geschalteten Spulen zuzuführen. Die Zahl der Wechselstromschienen entspricht dabei der Anzahl der Phasen. Bei den bevorzugten Ausführungsformen ist der Ständer hingegen mit Gleichstromschienen ausgerüstet, insbesondere also mit einer Plus-Schiene und einer Minus-Schiene, mit denen die längs des Umfangs verteilt angeordneten Leistungselektronikeinheiten elektrisch verbunden sind. Die Gleichstromscheinen werden von einer externen Gleichstromquelle, z.B. einer Batterie, gespeist. Sofern sich zwischen Batterie und Gleichstromschienen ein Spannungswandler oder ein sonstiges Trennglied befindet, bilden diese zusammen mit einer Zuführung einen sog. Zwischenkreis. Die Leistungsschalter der Leistungselektronikeinheiten erzeugen in der oben geschilderten Weise aus der an den Gleichstromschienen anliegenden Gleichspannung die für die Drehfelderzeugung gewünschten Wechselspannungen erst unmittelbar an den ihnen zugeordneten Spulen bzw. Spulengruppen.

Während die aus der WO 01/95461 A1 bekannten Wechselstromschienen dort den gesamten von den Verbindungsköpfen freigelassenen Raum auf einer Seite des Ständerkörpers ausfüllen, sind die Verhältnisse bei den Gleichstromschienen der vorliegenden bevorzugten Ausführungsformen anders: Zwar liegen auch diese Gleichstromschienen ringförmig in dem von den Verbindungsköpfen freigelassenen Raum, füllen diesen jedoch nicht vollständig aus. Denn zum einen ist die Anzahl der Gleichstromschienen geringer als die der nötigen Wechselstromschienen (nur zwei Gleichstromschienen statt dreier Wechselstromschienen bei einem Dreiphasensystem); zum anderen wurde erkannt, daß die Gleichstromschienen bei ansonsten gleicher Maschinenauslegung mit geringerem Gesamtquerschnitt als die entsprechenden Wechselstromschienen ausgeführt sein können, da gleichstromseitig keine oder nur geringe Blindanteile, wechselstromseitig jedoch i.a. relativ große Blindanteile vorliegen, und somit gleichstromseitig geringere Ströme fließen. Bei den bevorzugten Ausführungsformen wird der hierdurch gewonnene Raum für die Anordnung der Leistungselektronikeinheiten genutzt, so daß sich also in dem genannten, von den Verbindungsköpfen freigelassenen Raum sowohl die Gleichstromschienen als auch die Leistungselektronikeinheiten befinden.

Übliche Leistungsschalter-Bauelemente (z.B. MOSFETs) weisen einen Anschluß (i.a. den Source-Anschluß) auf, der als Kontaktfläche des Bauelementgehäuses ausgebildet ist. Bei den bevorzugten Ausführungsformen sind die Leistungsschalter-Bauelemente direkt mit der Kontaktfläche, ohne zwischengeschaltete elektrische Isolierung auf einem der Gleichstromschienen oder einer Spulenabgangsschiene, welcher der Stromzuführung von der Leistungselektronikeinheit zur zugeordneten Spule oder Spulengruppe dient, angeordnet (z.B. aufgelötet), was in anschluß- und kühltechnischer Hinsicht vorteilhaft ist. Die Gleichstrom- und Spulenabgangsschienen sind thermisch mit einer Wärmesenke gekoppelt. Aufgrund der i.a. hohen Wärmekapazität und -leitfähigkeit dieser Schienen dient die Anordnung der Leistungshalbleiter direkt auf diesen der thermischen Dämpfung von Temperaturspitzen, und der Ableitung der Verlustwärmen. Bei den bevorzugten Ausführungsformen wird die Wärmesenke durch einen am Außenumfang des Ständers umlaufenden Kühlkanal gebildet. Dieser ist zur Kopplung des Kühlkreislaufs des zur elektrischen Maschine gehörenden Kraftfahrzeug-Verbrennungsmotors vorgesehen. Die elektrische Maschine samt Leistungselektronik wird dann von dem Verbrennungsmotor-Kühlsystem mit gekühlt.

Bei den bevorzugten Ausführungsformen sind die Leistungselektronikeinheiten jeweils mit wenigstens einer Halbbrücken-Schaltung ausgerüstet. Eine Halbbrücken-Schaltung ist im wesentlichen aus zwei in Serie vom Pluspotential zum Minuspotential geschalteten Leistungsschaltern aufgebaut. Zwischen den beiden Schaltern ist der Spulenabgang angeschlossen. Von den beiden Schaltern wird zu einem gegebenen Zeitpunkt höchstens einer geschlossen. Je nachdem, welcher der beiden Schalter geschlossen ist, liegt das angeschlossene Ende der Spule bzw. Spulengruppe wahlweise auf Pluspotential oder Minuspotential. Indem die beiden Schalter mit variablem Tastverhältnis wechselweise ein- und ausgeschaltet wird, lassen sich variable effektive Spannungen einstellen. Als "Halb-Brücke" wird eine solche Schaltung deshalb bezeichnet, weil sie nur ein Spulenende beschaltet. Die jeweils anderen Enden der Spulen bzw. Spulengruppen sind bei den bevorzugten Ausführungsformen nach Art einer Sternschaltung elektrisch fest miteinander verbunden. Für die entsprechende Verbindung kann ein längs des Umfangs umlaufender Neutralleiterring sorgen. Alternativ ist es möglich, die jeweiligen Spulenenden im Wickelkopfbereich direkt miteinander zu verbinden. Alternativ zu einer Sternschaltung ist auch eine sog. Deltaschaltung möglich, bei der das einer betrachteten Halbbrükken-Schaltung ferne Ende einer Spule bzw. Spulengruppe mit einer anderen Halbbrücken-Schaltung ausgerüstet ist, wobei jede Halbbrücken-Schaltung mit zwei Spulen bzw. Spulengruppen von verschiedenen Phasenteilwicklungen verbunden ist. Eine Alternative zu einer Halbbrücken-Schaltung ist eine Vollbrücken-Schaltung, mit deren Hilfe eine angeschlossene Spule bzw. Spulengruppe an einem Ende an Plus- und am anderen an Minuspotential gelegt oder vollständig abgetrennt werden kann. Eine Vollbrücken-Schaltung wird im Prinzip durch je eine Halbbrücken-Schaltung an beiden Enden einer Spule bzw. Spulengruppe gebildet.

Bei den bevorzugten Ausführungsformen weisen die Leistungselektronikeinheiten auβerdem wenigstens jeweils eine Treiberschaltung zur Leistungsschalter-Ansteuerung auf. Und zwar liefern diese den Leistungsschaltern geeignete Schaltsignale. Zur Steuerung der Treiberschaltungen ist die elektrische Maschine mit einem zur Übertragung geeigneter Steuerdaten geeigneten Bus ausgerüstet. Grundsätzlich kann für die Ansteuerschaltungen einer Phasenteilwicklung jeweils ein gesonderter Bus vorgesehen sein. Bevorzugt sind jedoch Ausführungen mit einem gemeinsamen Bus für sämtliche Ansteuerschaltungen der Wicklung. Durch geeignete Adressierung kann hierbei sichergestellt werden, daß sich von Steuersignalen für eine bestimmte Phasenteilwicklung nur die zu dieser Phasenteilwicklung gehörenden Ansteuerschaltungen angesprochen werden. Grundsätzlich ist es möglich, den Ansteuerschaltungen in Echtzeit die jeweiligen Einschalt- und Abschaltzeitpunkte über den Bus durch entsprechend getimte und adressierte Datensignale vorzugeben. Der Bus arbeitet dann auf der Zeitskala der Taktfrequenz. Alternativ ist es zur Vermeidung etwaiger EMV-Probleme möglich, den Bus mit niedrigerer Frequenz zu betreiben, indem man den Ansteuerschaltungen über den Bus den gewünschten zeitlichen Verlauf des Tastverhältnisses signalisiert und außerdem einen Systemtakt (z.B. durch Synchronisationssignale) vorgibt, und die Ansteuerschaltungen so ausgebildet, daß sie die Leistungsschalter auf der Grundlage dieser Vorgaben selbsttätig mit gewünschten Tastverhältnis schalten.

Bei den bevorzugten Ausführungsformen sind die Leistungselektronikeinheiten außerdem mit jeweils wenigstens einem Kondensator ausgerüstet, welcher das Plus- mit dem Minuspotential verbindet. Diese Kondensatoren werden vorliegend als "Zwischenkreiskondensatoren" bezeichnet, selbst wenn in manchen Fällen strenggenommen kein "Zwischenkreis" vorliegt, etwa weil die Gleichstromschienen direkt an eine Batterie, ohne Zwischenschaltung eines Spannungswandlers oder dergleichen, angeschlossen sind. Die einzelnen Zwischenkreiskondensatoren sind also parallel geschaltet, so daß sie im statischen Fall elektrisch als ein großer Zwischenkreiskondensator mit einer Kapazität entsprechend der Summe der Einzelkapazitäten angesehen werden können. Für die hier vorliegenden transienten Vorgänge sind jedoch auch die Induktivitäten von Kondensatorzuleitungen zu berücksichtigen, so daß die hier bevorzugte Aufteilung eines großen Zwischenkreiskondensators in mehrere kleinere und deren Anordnung unmittelbar bei den Leistungsschaltern vorteilhaft ist. Da die Zwischenkreiskondensatoren ebenfalls eine Verlustleistung haben (typisch 1/10 der Verlustleistung der Halbleiter), sind sie vorteilhaft zur Wärmeabfuhr thermisch mit der oben genannten Wärmesenke gekoppelt.

Bei den bevorzugten Ausführungsformen ist die elektrische Maschine dafür bestimmt, drehfest mit der Kurbelwelle des Verbrennungsmotor oder einer Antriebswelle im Antriebsstrang des Kraftfahrzeugs gekoppelt zu werden, also permanent mit dieser Welle mitzudrehen. Bei bevorzugten Ausführungsformen als Kurbelwellenmaschine ist die elektrische Maschine dazu ausgebildet, konzentrisch auf einer Kurbelwelle zu sitzen, und zwar z.B. an derjenigen Stelle, an der sich bei Kraftfahrzeugen mit Schaltgetriebe die Kupplung bzw. bei Kraftfahrzeugen mit Automatikgetriebe die sog. Flexplatte befindet. Grundsätzlich kann es sich bei der elektrischen Maschine um eine rein als Generator um eine nur generatorisch arbeitende oder eine nur motorisch arbeitende Maschine handeln. Bevorzugt sind jedoch solche Ausführungsformen, bei denen die elektrische Maschine wahlweise sowohl generatorisch als auch motorisch arbeiten kann und hierdurch hauptsächlich als kombinierter Starter-Generator dienen kann. Daneben kann ein solcher Starter-Generator ggf. für weitere generatorische und motorische Funktionen ausgelegt sein, z.B. für elektrische Fahrzeugbremsung und Unterstützung des Verbrennungsmotors bei hoher Leistungsanforderung.

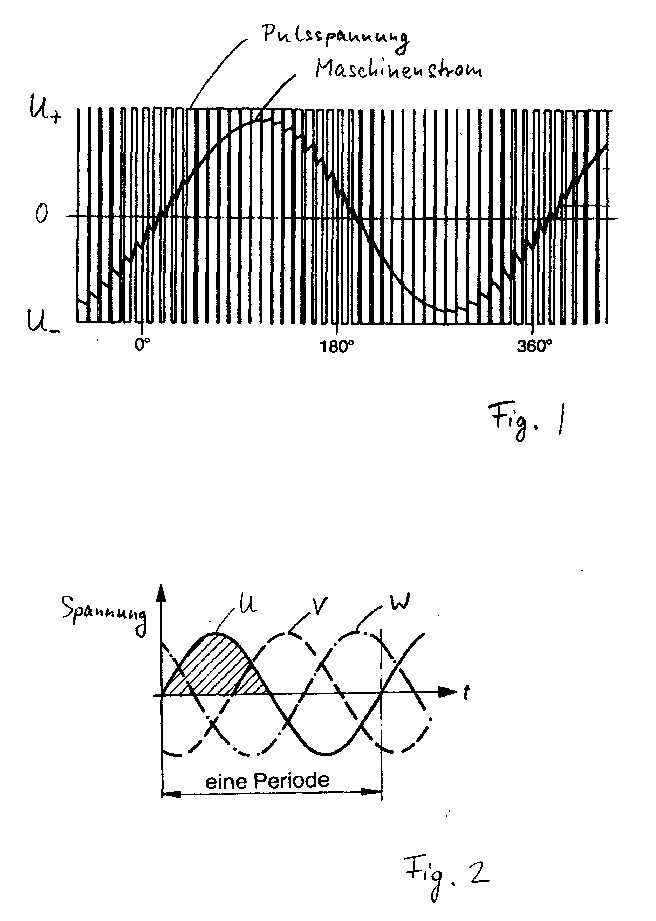

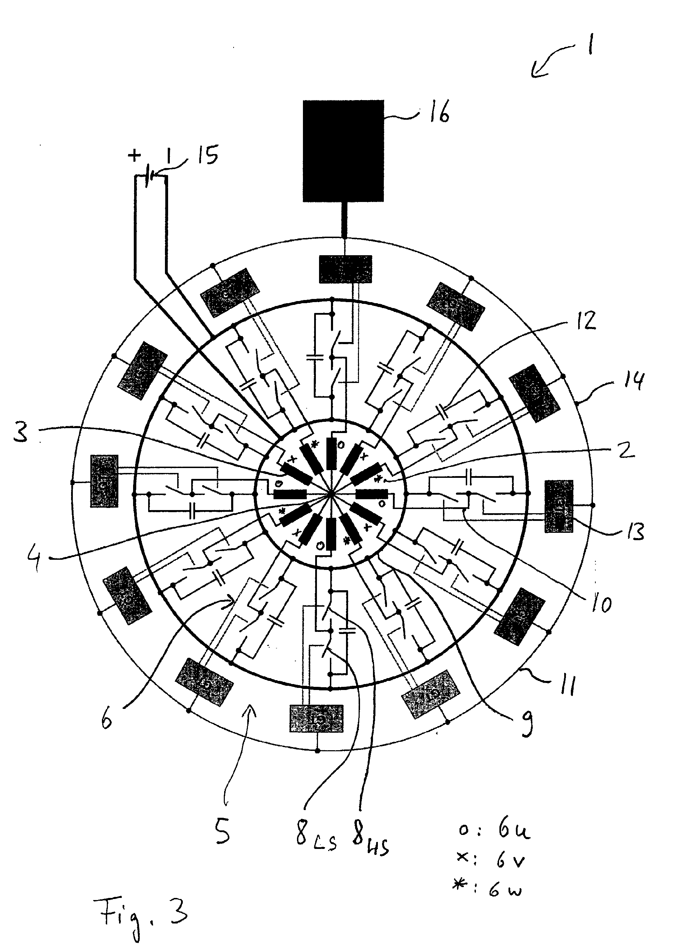

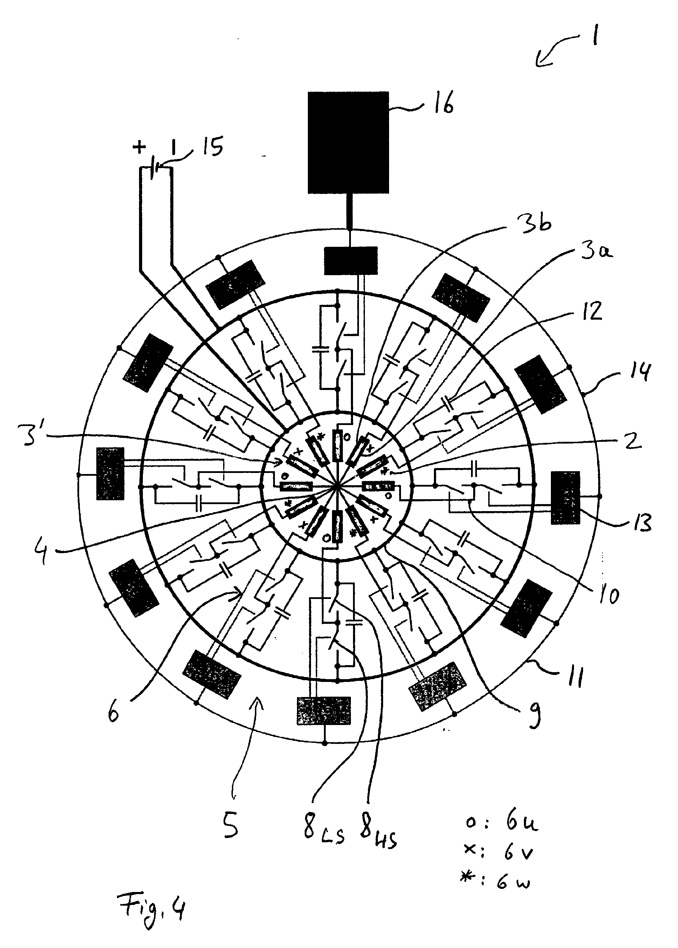

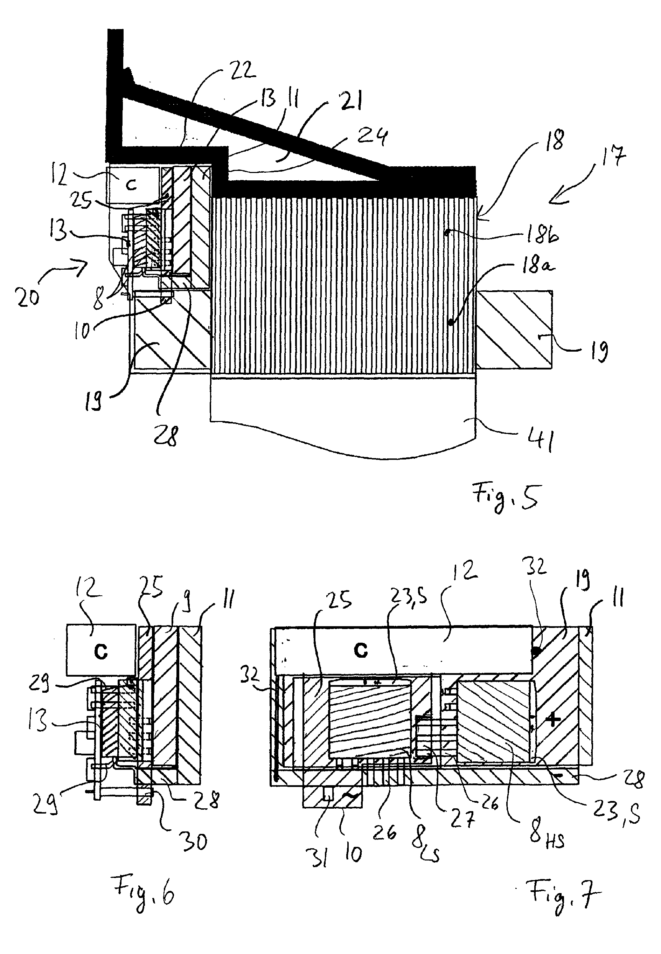

Nun zurückkehrend zu Fig. 1, ist dort ein Diagramm gezeigt, welches beispielhaft die Erzeugung eines angenähert sinusförmigen Maschinenstroms durch eine getaktete pulsweitenmodulierte Spannung aus einer Konstantspannungsquelle veranschaulicht. Der gepulste Spannungsverlauf wird dadurch herbeigeführt, daß mit einer Halbbrücken-Schaltung (Fig. 3) ein Ende einer Spule bzw. Spulengruppe taktweise zwischen positiver (U₊) und negativer Spannung (U₋) hin- und hergeschaltet wird. Bei fester Taktfrequenz erfolgt die Pulsweitenmodulation sinusbewertet, d.h. die Länge der Pulse wird in zeitlich veränderlicher Weise so gewählt, daß sich bei einer zeitlichen Mittelung des Pulsmusters näherungsweise ein sinusförmiger Spannungsverlauf mit einer gewünschten Frequenz, Amplitude und Phase ergeben würde. In Fig. 1 wurde angenommen, daß das andere Ende der betrachteten Spule bzw. Spulengruppe auf Null-Potential liegt, was z.B. bei einer Sternschaltung für den Neutralpunkt (Fig. 3) eine gute Näherung darstellt. Aufgrund der Induktivität der elektrischen Maschine wirkt diese als Tiefpaß, so daß der durch die Wicklung fließende Maschinenstrom dem getakteten Spannungsverlauf nicht direkt folgt, sondern - abgesehen von einer (nicht dargestellten) Phasenverschiebung zwischen Spannung und Strom - ein zeitliches Mittel bildet, so daß er näherungsweise der der Pulsweitenmodulation zugrunde gelegten Sinusform folgt. Somit veranschaulicht Fig. 1, wie aus einer Konstantspannungsquelle mit Hilfe zweier schneller Leistungsschalter ein Wechselstrom erzeugt werden kann, wobei sich allein durch geeignete Wahl der Schaltzeitpunkte innerhalb gewisser Grenzen beliebige Kurvenform, Amplitude, Frequenz und Phase einstellen.

Um in einer elektrischen Maschine ein drehendes Ständerfeld zu erzeugen, rüstet man die Maschine mit einer Mehrphasenwicklung mit einer der Phasenzahl entsprechenden Zahl von Phasenteilwicklungen aus und betreibt sie in einem Mehrphasensystem so, daß man an jede Phasenteilwicklung eine der Phasenspannungen anlegt. Zur Veranschaulichung zeigt Fig. 2 die Spannungsverhältnisse bei dem meisten verbreiteten Dreiphasensystem. Bei diesem sind die sinusförmigen Spannungsverläufe der drei Phasen jeweils um einen Phasenwinkel von 120° zueinander versetzt. Bei Phasensystemen mit höherer Phasenzahl (z.B. 5, 7, 12 etc.) ist die Phasenversetzung entsprechend geringer (z.B. 30° beim 12-Phasen-System).

Im folgenden wird nur der Fall einer Dreiphasenmaschine näher behandelt, wobei für den Fachmann Analogien zu Maschinen für mehr als drei Phasen klar sind. Bei einer Dreiphasenmaschine hat die Wicklung also drei Phasenteilwicklungen, an die jeweils eine der in Fig. 2 mit U, V, W bezeichneten Wechselspannungen anzulegen sind. Bei einer wechselrichtergesteuerten Maschine werden diese drei Spannungen jeweils durch eine pulsweitenmodulierte getaktete Spannung gemäß Fig. 1 erzeugt, wobei die Schaltzeitpunkte für die drei Phasen jeweils geeignet gewählt werden, um die gewünschte Phasenwinkelversetzung zu erzielen. Ein herkömmlicher Wechselrichter, wie er beispielsweise aus der WO 97/08456 bekannt ist, benötigt hierzu für jede Phasenteilwicklung eine Halbbrücke, insgesamt also sechs Leistungsschalter oder ggf. sechs Parallelschaltungen von Leistungsschaltern innerhalb des Wechselrichters. Fig. 3 zeigt ein Schaltschema einer elektrischen Drehfeld-Maschine 1. Deren Wicklung 2 ist aus zwölf Spulen 3 aufgebaut, die nach Art einer Sternschaltung an einem Spulenende in einem sog. Neutralpunkt 4 elektrisch miteinander verbunden sind, und die jeweils am anderen Ende elektrisch mit einer Leistungselektronikeinheit 5 verbunden sind. Da es sich um Dreiphasen-Maschine handelt, ist die Wicklung 2 so aufgebaut, daß sie drei Phasenteilwicklungen 6u, 6v, 6w aufweist, die von jeweils vier der Spulen 5 gebildet werden. Es handelt sich bei der in Fig. 3 gezeigten Maschine 1 also um eine Maschine mit Polpaarzahl vier. Bei einer herkömmlichen, z.B. gemäß WO 97/08456 aufgebauten Dreiphasenmaschine mit Polpaarzahl 4 wären die vier Spulen jeder Phasenteilwicklung fest in Parallelschaltung miteinander verdrahtet, und jede dieser Phasenteilwicklungen würde von einem Phasenteil eines Wechselrichters mit getakteter pulsweitenmodulierter Spannung gemäß Fig. 1 zur Erzeugung einer der in Fig. 2 veranschaulichten Phasenspannungen gespeist. Bei der vorliegenden bevorzugten Ausführungsform gemäß Fig. 3 ist jedoch eine andere Lösung gewählt, bei der Teilschaltungen des Wechselrichters nicht mehr ganze Phasenteilwicklungen zugeordnet sind, sondern einzelnen Spulen oder Spulengruppen von Phasenteilwicklungen. Gemäß Fig. 3 ist jede der Spulen 3 mit einer eigenen Leistungselektronikeinheit 5 ausgerüstet.

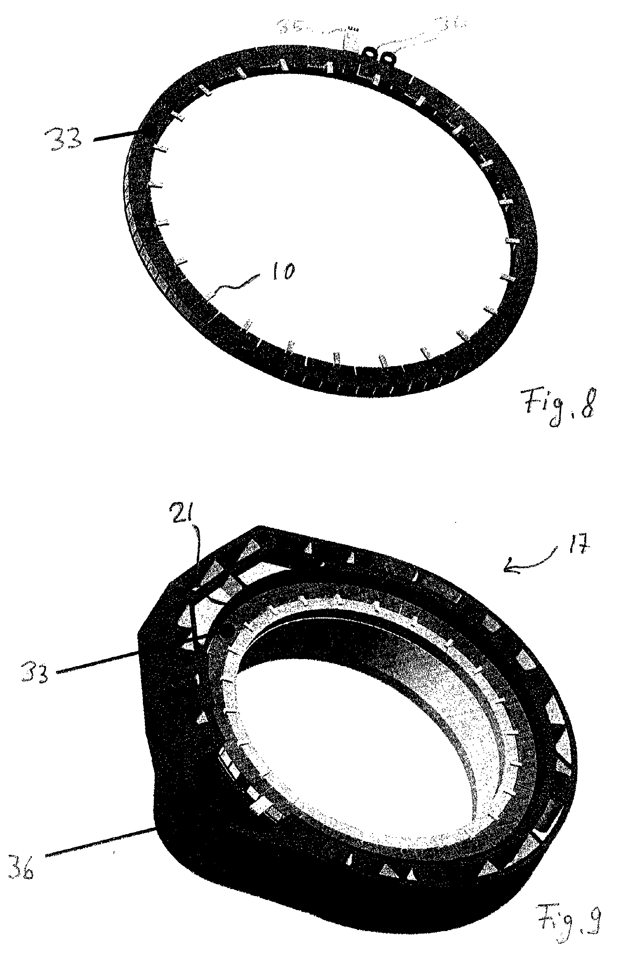

Bei einer alternativen Ausführungsform gemäß Fig. 4 ist statt der Spulen 3 jeweils eine Spulengruppe 3' vorgesehen, die durch eine Parallelschaltung zweier Spulen 3a, 3b gebildet ist; entsprechend ist jede Spulengruppe 3' mit einer eigenen Leistungselektronikeinheit 5 ausgerüstet.

Bei den Leistungselektronikeinheiten 5 handelt sich jeweils um eine Halbbrücken-Schaltung 7, bei der eine Serienschaltung zweier Leistungsschalter 8 an die Versorgungs-Gleichspannung gelegt ist. Bei den Leistungsschaltern 8 handelt es sich vorzugsweise um MOSFETs, möglich sind aber auch andere steuerbare Schalter, wie IGBTs, Thyristoren, etc. Der an hohem Spannungsniveau liegende Leistungsschalter 8, der sog. HS-Schalter 8_{HS} (HS steht für "High side") ist mit seinem Source-Anschluß S mit einer Plus-Stromschiene 9 und mit seinem Drain-Anschluß D mit einem Spulenabgang 10 verbunden. Der an niedrigem Spannungsniveau liegende Leistungsschalter 8, der sog. LS-Schalter 8_{LS} (LS steht für "Low side") ist mit seinem Source-Anschluß S mit dem Spulenabgang 10 und mit seinem Drain-Anschluß D mit einer Minus-Stromschiene 11 verbunden. Die Spulenabgänge 10 sind wiederum jeweils mit einem Ende der Spulen 3 bzw. Spulengruppen 3' verbunden. Die Leistungselektronikeinheiten 5 sind außerdem jeweils mit einem Zwischenkreiskondensator 12 ausgerüstet, welcher der Serienschaltung der beiden Leistungsschalter 8 parallel, also zwischen die Plus-Stromschiene 9 und die Minus-Stromschiene 11 geschaltet ist. Außerdem ist jede Leistungselektronikeinheit 5 mit einer Ansteuerschaltung 13 mit Treiberschaltungen zum Ansteuern der Leistungsschalter 8 ausgerüstet, die hierzu jeweils mit dem Gate-Anschluß der Leistungsschalter 8 verbunden sind. Die Ansteuerschaltungen 13 sind mit einem durchgehenden Datenbus 14 gekoppelt. Nach außen ist die elektrische Maschine 1 also einerseits mit den Gleichstromschienen 9, 11 an eine Spannungsquelle, z.B. Batterie 15 angeschlossen. Andererseits ist der Datenbus 14 mit einem Mikrocontroller 16 gekoppelt, der die Ansteuerschaltungen 13 so steuert, daß sie an die jeweils zu einer Phasenteilwicklung 6u, 6v, 6w gehörenden Spulen 3 bzw. Spulengruppen 3' jeweils eine der in Fig. 2 veranschaulichten effektiven Phasenspannungen mit Hilfe einer Pulsmodulation gemäß Fig. 1 anlegen. Die einzelnen Spulen 3 bzw. Spulengruppen 3' einer Phasenteilwicklung 6u, 6v, 6w verhalten sich daher vom effektiven Spannungsverlauf und damit vom Maschinenstrom her so, als wären sie in Parallelschaltung miteinander verdrahtet. Tatsächlich ist aber jede der Spulen 3 bzw. Spulengruppen 3' mit einer eigenen Leistungselektronikeinheit 5 ausgerüstet, so daß durch eine Leistungselektronikeinheit 5 nur ein Teilstrom des Stroms für eine Phase, nämlich der durch die zugeordnete Spule 3 bzw. Spulengruppe 3' fließende Teilstrom fließt.

Klarstellend sei noch darauf hingewiesen, daß sich die in Fig. 3 veranschaulichte Dreiphasen-Maschine mit Polpaarzahl 4 von einer herkömmlichen 12-Phasen-Maschine mit Polpaarzahl 1 steuerungsmäßig und baulich unterscheidet. Eine 12-Phasen-Maschine hätte zwölf Phasenteilwicklungen, und wie bei jeder herkömmlichen Mehrphasenmaschine wäre jeder Phasenteilwicklung ein eigener Wechselrichterteil zugeordnet, um den für diese Phasenteilwicklung spezifischen Wechselstrom, der gegenüber allen anderen Phasen phasenverschoben ist, zu erzeugen. Man erhielte für eine solche herkömmliche 12-Phasen-Maschine somit zwar ein Schaltschema ähnlich Fig. 3. Steuerungsmäßig würde sich aber eine solche 12-Phasen-Maschine von der vorliegenden Maschine dadurch unterscheiden, daß bei ihr die Ströme aller Spulen zueinander phasenverschoben sind, während bei letzterer durch die Spulen einer Phasenteilwicklung phasengleiche Ströme fließen. Baulich würde sich eine solche 12-Phasen-Maschine hinsichtlich der Wicklung unterscheiden: Bei einer 12-Phasen-Maschine mit Polpaarzahl 1 wären z.B. bei einer Durchmesserwicklung die Spulenseiten jeder Spule gegenüberliegend am Umfang angeordnet, die Verbindungsleiter der Spulen würden also längs des Durchmessers des Ständers verlaufen. Bei einer Verringerung der Phasenzahl und entsprechender Erhöhung der Polpaarzahl (z.B. auf drei Phasen und vier Polpaare) steht pro Polpaar nur noch ein entsprechender Bruchteil eines Vollkreises zur Verfügung (bei dem gegebenen Beispiel ein Viertel von 360°, also 90°), so daß die Verbindungsleiter nicht mehr längs des Durchmessers verlaufen, sondern nur noch längs eines Kreisabschnitts entsprechend einem 90°-Sektor. Bei der vorliegenden Maschine sind die Verbindungsleiter also kürzer als bei einer entsprechenden höherphasigen Maschine ohne in Phasenteilwicklungen parallelgeschaltete Spulen.

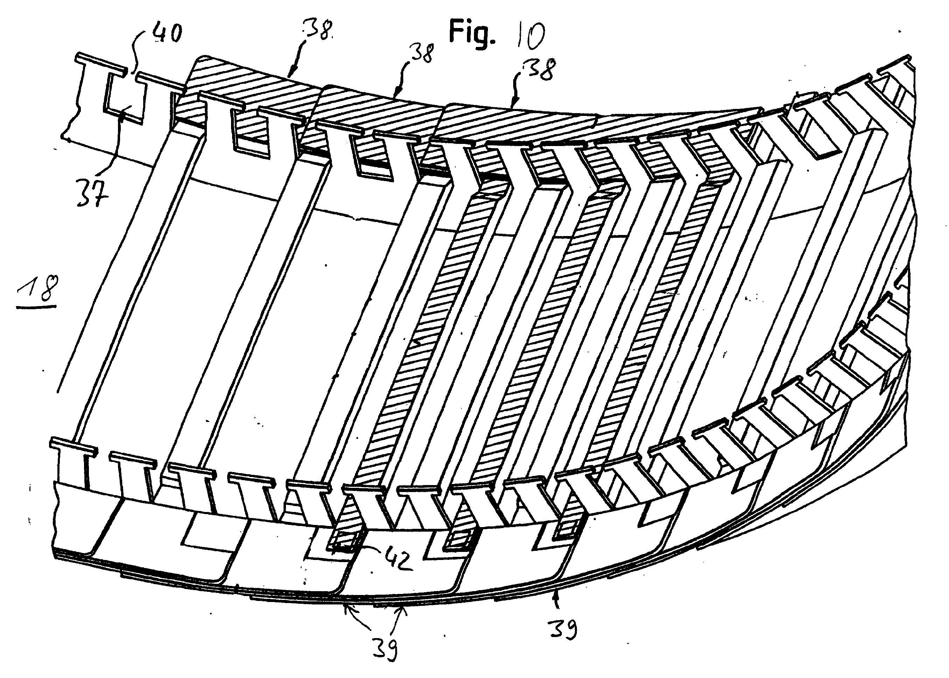

Die räumliche Ausgestaltung und Anordnung der Leistungselektronikeinheiten 5 ist in den Fig. 5 bis 7 gezeigt, wobei Fig. 5 eine Schnittansicht eines Ständers, Fig. 6 eine entsprechende Schnittansicht einer Leistungselektronikeinheit und Fig. 7 eine Draufsicht einer Leistungselektronikeinheit ohne Ansteuerschaltung (und mit seitlich ausgebrochener Plus-Gleichstromschiene, die den Blick auf die eigentlich verdeckt darunter liegende Minus-Gleichstromschiene erlaubt) zeigt.

Fig. 5 zeigt im Schnitt einen Ständer 17 der elektrischen Maschine 1 mit einer Leistungselektronikeinheit 5. Dieser weist einen Ständerkörper 18 auf, dem radial innen ein in Fig. 5 nur als Ausschnitt schematisch dargestellter Läufer 41 gegenüberliegt. Es kann sich bei ihm z.B. um einen Kurzschlußläufer (bei einer Asynchronmaschine) oder einen mit Permanent- oder Elektromagneten ausgerüsteten Läufer (bei einer Synchronmaschine) handeln. Der Ständerkörper 18 ist aus einem in Axialrichtung geschichteten Blechpaket aufgebaut. Er weist in einem radial inneren Bereich, dem Nutbereich 18a Nuten auf, die im wesentlichen in Radialflächen liegen. Obwohl die Papierebene der Fig. 5 eine solche Radialfläche darstellt, zeigt Fig. 5 keine Nut, da die hier dargestellte Schnittebene zwischen zwei Nuten verläuft. Der radial äußere Teil des Ständerkörpers, der Ständerrücken 18b weist keine Nuten auf, er leitet vielmehr den magnetischen Rückfluß in Umfangsrichtung.

Im Nutbereich 18a ist der Ständerkörper mit Spulen 3 ausgerüstet, deren durch Nutleiter (nicht dargestellt) gebildete Spulenseiten in den Nuten liegen. Die Nutleiter der beiden Spulenseiten einer Spule 3 sind durch stirnseitig verlaufende Verbindungsleiter miteinander verbunden, welche zusammen von den Stirnseiten des Ständerkörpers 18 in Axialrichtung vorstehende Verbindungsköpfe 19 bilden. Da sich bei der Wicklung 2 jeweils mehrere der Spulen 3 überlappen, wie z.B. bei der in der WO 01/95461 A1 im einzelnen beschrieben ist, verlaufen im Verbindungskopf 19 nicht jeweils nur die Verbindungsleiter einer Spule 3, sondern diejenigen mehrerer, überlappender Spulen 3. Obwohl grundsätzlich Ausführungsformen eine Drahtwicklung aufweisen können, sind die besonders bevorzugten und im folgenden näher beschriebenen Ausführungsformen aus Formteilen aufgebaut. Bei diesen sind vorzugsweise die Verbindungsleiter blattartig, d.h. flacher und breiter als die Nutleiter, aufgebaut, damit sie kammartig überlappend im Verbindungskopf 19 angeordnet sein können, wie in der WO 01/95461 A1 näher beschrieben ist. Ein solcher Wicklungsaufbau ermöglicht sehr kompakte Verbindungsköpfe 19, die den radial außerhalb der Verbindungsköpfe 19 und stirnseitig in Axialrichtung vor dem Ständerrücken 18b liegenden Raum 20 nicht benötigen. Aber auch bei den weniger bevorzugten, aber dennoch vorteilhaften Ausführungsformen mit Drahtwicklung lassen sich die Verbindungsköpfe 19 so gestalten, daß sie entsprechend Fig. 5 einen Raum 20 in Axialrichtung vor dem Ständerrücken 18b freilassen.

Bei den besonders bevorzugten und hier näher beschriebenen Ausführungsformen ist die elektrische Maschine 1 eine Radialfeld-Innenläufermaschine, wie in Fig. 5 dargestellt. Bei anderen (nicht dargestellten) Ausführungsformen ist sie eine Außenläufermaschine, bei der die Nuten nach radial außen offen und radial innen geschlossen sind, und der genannte Raum 20 radial innerhalb der Verbindungsköpfe liegt. Ansonsten gelten für solche Außenläufermaschinen im wesentlichen alle vorliegenden Ausführungen analog.

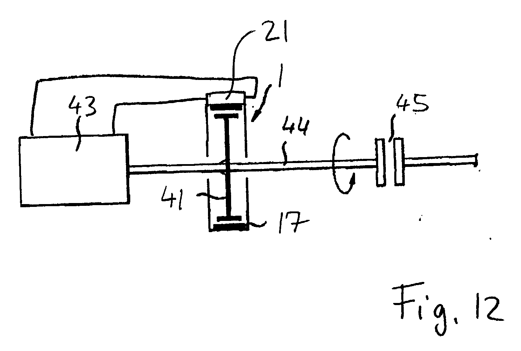

Der von den Verbindungsköpfen freigelassene Raum 20 bildet einen Ringraum, in dem bei den bevorzugten Ausführungsformen die Gleichstromschienen 9, 11 und die Leistungselektronikeinheiten 5 angeordnet sind. Die Gleichstromschienen 9, 11 haben die Form relativ flacher Ringe, deren Flachseite in Radialebenen liegen. Sie sind mit einer elektrisch isolierenden Schicht überzogen. Unmittelbar an der Stirnseite des Ständerrückens 18b liegt zunächst die Minus-Stromschiene 11 an, auf diesen unmittelbar aufgesetzt folgt die Plus-Stromschiene 9 und hierauf wiederum folgen abschnittsweise aufgesetzte Spulenabgangsschienen 25. Radial außerhalb des Ständerkörpers ist ein umfangsmäßig umlaufender Kühlkanal 21 vorgesehen, der sich auch in Axialrichtung über den Raum 20 erstreckt. Der Kühlkanal 21 ist an einen Kühlkreislauf angeschlossen, vorzugsweise an den im Kraftfahrzeug bereits vorhandenen Kühlkreislauf des Verbrennungsmotors, wie anhand von Fig. 12 noch näher erläutert wird. Die Gleichstromschienen 9, 11 und die Spulenabgangsschienen 25, sind mit ihrer radial äußeren Umfangsfläche in Wärmeleitungskontakt mit einer Kühlwandung 22 des Kühlkanals 21. Eine weitere Kühlung dieser Leiter 9, 11, 25 erfolgt dadurch, daß die Minus-Stromschiene 11 flächig an dieser Stirnseite des Ständerrückens 18 wärmeleitend anliegt, der wiederum durch die Wandung 22 des Kühlkanals 21 gekühlt wird. Da die beiden Gleichstromschienen 9, 11 auch untereinander und mit den Spulenabgangsschienen in Wärmeleitungskontakt stehen, bewirkt dies eine zusätzliche Wärmeableitung aus der Plus-Stromschiene 11 und der Spulenabgangsschienen 25 durch die Plus-Stromschiene 9 hindurch.

Die vorzugsweise verwendeten Leistungsschalter-Bauelemente 8 (insbesondere MOSFETs) sind so ausgebildet, daß einer ihrer Gehäuseanschlüsse als Kontaktfläche 23 ausgebildet ist. Wie unten im Zusammenhang mit Fig. 6 und 7 noch näher erläutert wird, sind die Leistungsschalter mit ihrer Kontaktfläche direkt, d.h. ohne Zwischenschaltung einer elektrischen Isolierschicht, auf der Plus-Stromschiene 11 bzw. Spulenabgangsschienen 25 so aufgebracht (z.B. verlötet), daß sie mit diesen Leitern 11, 25 in elektrischem und in Wärmeleitungs-Kontakt stehen. Da die Gleichstromschienen 9, 11 und die Spulenabgangsschienen 25 einen relativ hohen Querschnitt aufweisen und i.a. aus einem Material mit hoher Wärmeleitfähigkeit und Wärmekapazität gefertigt sind (insbesondere Kupfer oder Kupferlegierung), leistet diese Anordnung eine hervorragende Kühlung der Leistungsschalter, und zwar nicht nur im Dauerbetrieb mit im wesentlichen konstanter Verlustleistung (die bei typischen Auslegungen 20 bis 40 Watt betragen könnte), sondern auch bei Verlustleistungsspitzen, wie sie etwa beim Starten des Fahrzeugs auftreten können.

Bei den bevorzugten Ausführungsformen sitzt die Ansteuerschaltung 13 direkt auf den Leistungsschaltern 8, wodurch die elektrischen Verbindungen zwischen Ansteuerschaltung 13 und Leistungsschaltern 8 relativ kurz ausgebildet sein können. Schließlich ist bei jeder Leistungselektronikeinheit 5 ein Zwischenkreiskondensator 12 angeordnet, der, wie in Fig. 5 gezeigt ist, vorzugsweise radial außerhalb der Ansteuerschaltung 13 und in Axialrichtung vor den Gleichstromschienen 9, 11 und den Spulenabgangsschienen 25 in Wärmeleitungskontakt mit der Kühlwandung 22 steht.

Insgesamt liegt die aus den genannten Teilen aufgebaute Leistungselektronikeinheit 5 samt Gleichstromschienen 9, 11 und Spulenabgangsschienen 25 vollständig oder überwiegend in dem genannten, vom Verbindungskopf 19 freigelassenen Raum 20. Bei zusätzlichem Raumbedarf kann, wie in Fig. 5 gezeigt, die Leistungselektronikeinheit 5 in Axialrichtung über den Verbindungskopf 19 herausstehen und/oder daß die Kühlwandung 22 des Kühlkanals 21 im Bereich der Leistungselektronikeinheit 5 eine Kröpfung 24 nach radial außen bilden, Die Kröpfung 24 vergrößert auch die Wärmekontaktfläche zwischen Minus-Stromschiene 11 und Wandung 22 und trägt damit zur besseren Kühlung der Leistungselektronikeinheit 5 bei. Bei anderen (nicht gezeigten) Ausführungsformen ist keine derartige Kröpfung vorgesehen; hier bildet die Kühlwandung 22 eine durchgehend ebene Umfangsfläche.

Wie in den Fig. 6 und 7 nochmals detaillierter gezeigt ist, sind die durch die Gleichstromschienen 9, 11 und die längs des Umfangs abschnittsweise angeordneten Spulenabgangsschienen 25 gebildeten Anschlußleiter in Axialrichtung geschichtet aufgebaut. Damit ergibt sich entlang des Umfangs eine Leiterstruktur, bei dem fortlaufend auf einen axial tieferliegenden Bereich, in dem die Plus-Stromschiene 9 die axial äußerste Leiterfläche bildet, ein axial weiter außen liegender Bereich mit einer Spulenabgangsschiene 25 folgt. Entsprechend dieser abschnittsweisen Schichtenstruktur sind die auf der Plus-Stromschiene 9 und der Spulenabgangsschiene 25 aufgelöteten Leistungsschalter 8_{HS}, 8_{LS} auf zwei verschiedenen Etagen angeordnet. Der HS-Leistungsschalter 8_{HS} ist mit seiner den Source-Anschluß S bildenden Kontaktfläche 23 in einer der Ausnehmungen zwischen zwei Spulenabgangsschienen 25 auf der Plus-Stromschiene 9 aufgelötet. Er ist dabei so orientiert, daß seine den Drainanschluß D bildenden Anschlußdrähte 26 mit der zugehörigen Spulenabgangsschiene 25 elektrisch verbunden (insbesondere verlötet) sind. Hierbei kann in der Spulenabgangsschiene 25 eine Ausnehmung 27 vorgesehen sein, welche eine relativ großflächige Verbindung der Drain-Anschlußdrähte D ohne Drahtbiegung mit der Spulenabgangsschiene 25 erlaubt. Bei anderen Ausführungsformen kann diese Ausnehmung entfallen, und die Drähte können z.B. ohne Biegung stumpf oder mit Biegung flächig mit der Spulenabgangsschiene 25 verbunden sein. Der LS-Leistungsschalter 8_{LS} ist mit seiner den Source-Anschluß S bildenden Kontaktfläche 23 auf der Spulenabgangsschiene 25 aufgelötet. Seine den Drain-Anschluß D bildenden Anschlußdrähte 26 sind mit der Minus-Spannungsschiene 11 elektrisch verbunden (insbesondere verlötet). Diese ist zu diesem Zweck an ihrem wickelkopfseitigen Ende mit einem sich nach axial außen erstreckenden Bund 28 ausgerüstet, welcher die Plus-Stromschiene 9 untergreift. Die genannten Drain-Anschlußdrähte 26 des LS-Leistungsschalters 8_{LS} sind stirnseitig auf diesen Bund 28 geführt. Der LS-Leistungsschalter 8_{LS} ist somit gegenüber dem HS-Leistungsschalter 8_{HS} um 90° gedreht angeordnet. Die Leistungsschalter 8_{HS}, 8_{LS} weisen schließlich Gate-Anschlußdrähte 29 auf, welche nach axial außen gerichtet sind und an der axial auf den Leistungsschaltern 8a, 8b angeordneten Ansteuerschaltung 13 angeschlossen sind. Bei anderen (nicht gezeigten) Ausführungsformen sind die Leistungshalbleiter direkt ohne Gehäuse mit einer Anschlußfläche (Source) auf die Schienen gelötet; die anderen Anschlüsse (Drain, Gate) sind auf die Halbleiter gebondet.

Da die Steuerung der elektrischen Maschine 1 (insbesondere wenn es sich bei ihr um eine Asynchronmaschine handelt) erleichtert ist, wenn der tatsächlich fließende Strom bekannt ist, ist zumindest eine der Leistungselektronikeinheiten 5 pro Phasenteilwicklung 6u, 6v, 6w, (vorteilhaft aber sämtliche Leistungselektronikeinheiten 5) mit einer Strommeßsonde 30 ausgerüstet, die sich stiftartig von der Ansteuerschaltung 13 nach axial innen in ein Loch 31 in der Spulenabgangsschiene 25 erstreckt. Sie ist zur Strommessung beispielsweise mit einem Hall-Element ausgerüstet. Der Zwischenkreiskondensator 12 ist über geeignete Anschlüsse 32 einerseits mit dem Plus-Stromschiene 9 und andererseits mit dem Bund 28 der Minus-Stromschiene 11 elektrisch verbunden. Der Datenbus 14 kann z.B. durch ein umlaufendes Datenkabel, an welches jede Ansteuerschaltung 13 angeschlossen ist, realisiert sein; er ist in Fig. 5 bis 7 nicht näher dargestellt.

Der bei einer Sternschaltung die einzelnen Spulen miteinander verbindende Neutralleiter 4 kann mit geringem Querschnitt dimensioniert sein, da in ihm näherungsweise kein Strom fließt. Bei der in Fig. 5 gezeigten Ausführungsform ist er als umlaufende Neutralleiterschiene radial innerhalb des Bunds 28 ausgebildet. Alternativ kann der Neutralleiter auch durch speziell ausgebildete Wicklungsformteile gebildet werden, die jeweils mit dem entsprechenden Spulenanschluß von Nachbarspulen verbunden werden und so als Ganzes einen durchgehenden Neutralleiter 4 bilden.

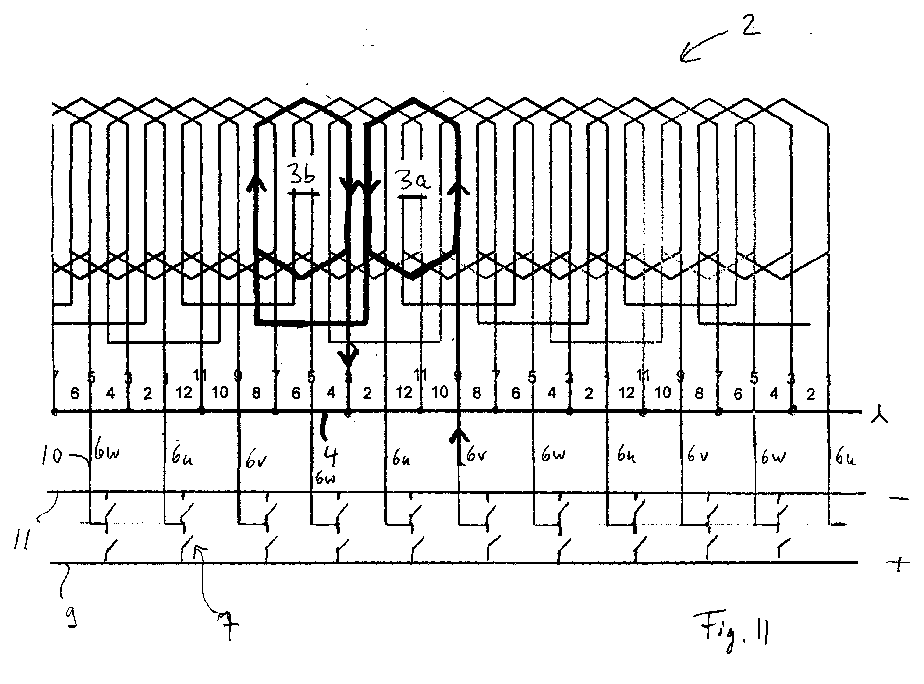

Fig. 8 zeigt eine perspektivische Ansicht einer vormontierten Leistungselektronik-Baugruppe 33, die sich ringförmig aus einer Vielzahl nebeneinander auf den Gleichstromschienen 9, 11 angeordneten Leistungselektronikeinheiten 5 zusammengesetzt. Bei dem in Fig. 8 dargestellten Beispiel handelt es sich um 24 solcher Leistungselektronikeinheiten; diese Baugruppe ist also z.B. für eine Dreiphasenmaschine mit acht Spulen pro Phasenteilwicklung vorgesehen, von denen jede mit einer eigenen Leistungselektronikeinheit 5 ausgestattet ist. Von der Spulenabgangsschiene 25 führt ein stiftartiger Spulenabgang 10 nach radial innen. Die Leistungselektronik-Baugruppe 33 ist an einer Stelle des Umfangs mit zwei Klemmen 34 ausgerüstet, die Teil der Plus-Stromschiene 9 bzw. der Minus-Stromschiene 11 sind, und dem Anschluß einer Gleichspannungsquelle dienen. Außerdem ist sie mit einem Datenanschluß 35 ausgerüstet, mit dem der Datenbus 14 an ein Steuergerät oder eine zu einem Steuergerät führende Datenleitung angeschlossen wird.

Fig. 9 zeigt eine perspektivische Ansicht des (geöffneten) Ständers 17 mit eingebauter Leistungselektronik-Baugruppe 33. Sichtbar ist hier der ringspaltförmig um den Ständerrücken 18b umlaufende Kühlkanal 21. In einer Gehäuseausbuchtung 36 am Ort der Klemmen 34 und des Datenanschlusses 35 ist ein Steuergerät für die Leistungselektronikeinheiten 5 integriert, außerdem sind dort die Anschlußklemmen 34 für den Batterieanschluß herausgeführt.

Fig. 10 veranschaulicht anhand einer perspektivischen Ansicht eines Ständerausschnitts mit Blickrichtung von schräg innen auf den Nutbereich 18a des Ständers 17, wie eine bevorzugte Ausführungsform einer Wicklung aus L-förmigen Formteilen aufgebaut wird. Und zwar handelt es sich hier wiederum um eine Radialfeldmaschine in Innenläuferbauart, in deren Nuten 37 Formteile 38, 39 eingesetzt sind. Damit die eigentliche Wicklung besser sichtbar ist, sind nur die beiden Stirnseiten des Ständerkörpers 18 eingezeichnet. Tatsächlich ist dieser wiederum massiv und typischerweise aus in Axialrichtung übereinander geschichteten Elektroblechen hergestellt. Die dargestellten Stirnseiten des Ständerkörpers 18 entsprechen also jeweils etwa dem äußersten Blech des Blechpakets. Die Formteile 38, 39 sind direkt über dem Nutboden in die Nuten 37 eingesetzt. Letztere sind an ihrem Kopf 40 verengt, so daß die L-Formteile 38, 39 nur in Axialrichtung in die Nuten einzuschieben sind. Von der dem Betrachter zugewandten Stirnseite ist bereits eine Lage von Formteilen 39 eingesetzt, von der gegenüberliegenden Stirnseite sind drei Formteile 38 eingesetzt. Jeweils nach dem Einsetzen einer kompletten Lage solcher Formteile werden diese an Verbindungsstellen 42 miteinander verbunden (z.B. durch Schweißen, Löten, etc.), so daß sich nach Aufbau der gesamten Wicklung zwei wendelförmig zusammenhängende Spulen mit kammartig verschränkten, kompakten Verbindungsköpfen 19 ergeben. Details über den Aufbau einer solchen Wicklung können der eingangs genannten WO 01/95461 A1 entnommen werden.

Fig. 11 zeigt ein beispielhaftes Wickelschema, nachdem die Wicklung 2 der bevorzugten Ausführungsformen ausgeführt sein kann. Es zeigt, wie die einzelnen Spulen in den Nuten 37 des Ständerkörpers 18 verteilt sind, wobei bei dieser Wicklung 2 in jeder Nut 37 nur eine Spulenseite liegt (Einschichtwicklung). Das gezeigte Wickelschema wiederholt sich alle zwölf Nuten. Zwecks Anschaulichkeit ist in Fig. 11 eine Spule 3 einer Phasenteilwicklung, nämlich 6v fett hervorgehoben. Der hier gezeigte Ausschnitt umfaßt drei zu dieser Phasenteilwicklung 6v gehörige Spulen 3, die jeweils aus zwei in Reihe geschalteten Teilspulen 3a, 3b aufgebaut sind. Die Teilspulen 3a, 3b sind hier vereinfacht als geschlossene Ringe dargestellt - tatsächlich handelt es sich bei ihnen um Wendel mit z.B. acht Windungen. Jede Spule 3 ist mit einer allein ihr zugeordneten Leistungselektronikeinheit 5 ausgerüstet. Am jeweils anderen Spulenende sind die Spulen 3 mit dem Neutralleiter 4 verbunden. Die beiden hintereinander geschalteten Teilspulen 3a, 3b sind so ausgebildet, daß zu einem bestimmten Zeitpunkt in der einen Teilspule 3a der Strom in Richtung Nutkopf, und in der anderen Teilspule 3b in Richtung Nutboden fließt (durch Pfeile veranschaulicht). Durch diese Hintereinanderschaltung befinden sich die Anschlüsse der Spule 3, nämlich der Anschluß zum Spulenabgang 10 und derjenige zum Neutralleiter 4 auf derselben radialen Seite des Verbindungskopfs 19, und zwar vorzugsweise auf der radial äußeren Seite, was dort den Anschluß der Leistungselektronikeinheiten 5 erleichtert. Bei anderen (nicht gezeigten) Ausführungsformen können mehrere solche Paare von Teilspulen in Serie geschaltet sein. Alternativ ist auch die Verwendung von Einzelspulen möglich, wobei dann allerdings ein Spulenende auf der radial inneren Seite des Verbindungskopfs 19 liegt und mit einer Überführung auf die äußere Seite zur Leistungselektronikeinheit 5 zu führen ist.

Fig. 12 veranschaulicht ein Kraftfahrzeug-Antriebssystem mit einem durch die elektrische Maschine 1 gebildeten Kurbelwellenstarter-Generator. Und zwar weist das Antriebssystem einen Verbrennungsmotor 43 auf, der Drehmoment über eine Antriebswelle 44 (z.B. die Kurbelwelle), eine Kupplung 45 und weitere (nicht gezeigte) Teile eines Antriebsstrangs auf die Antriebsräder des Fahrzeugs abgibt. Auf der Antriebswelle 44 sitzt mit drehfest mit ihr verbundenem Läufer 41 die als Starter und Generator arbeitende elektrische Maschine 1. Der Kühlkanal 21 des Ständers 17 ist Teil des Kühlkreislaufs des Verbrennungsmotors 43, wobei die übliche, i.a. vom Verbrennungsmotor angetriebene Kühlmittelpumpe auch für die Zirkulation des Kühlmittels im Kühlkanal 21 sorgt. Alternativ kann der zur elektrischen Maschine 1 führenden Teilkühlkreislauf mit einer eigenen Kühlmittelpumpe ausgerüstet sein, die z.B. elektrisch angetrieben ist und daher unabhängig von der momentanen Verbrennungsmotordrehzahl fördert.

Die gezeigten Ausführungsformen sind, da ein gesonderter Wechselrichter entfällt und die Leistungselektronik direkt in den Ständer integriert ist, hinsichtlich Aufwand, Platzbedarf und Gewicht vorteilhaft gegenüber Lösungen des Standes der Technik. Die Ausrüstung der Spulen oder Spulengruppen einer Phasenteilwicklung mit jeweils eigenen Leistungselektronikeinheiten erhöht zudem die Ausfallsicherheit, da eine derartige Maschine auch bei Ausfall einer oder einiger weniger solcher Leistungselektronikeinheiten weiter arbeiten kann.

## Patentansprüche

1. Elektrische Maschine, die als Starter, Generator oder als Starter-Generator für ein Kraftfahrzeug ausgebildet ist,
mit einem Ständer, der folgendes aufweist:
- eine Wicklung (2),
- längs des Umfangs des Ständers (17) verteilt angeordnete Leistungselektronikeinheiten (5) mit Leistungsschaltern (8),
**dadurch gekennzeichnet, daß**
die elektrische Maschine (1) so ausgebildet ist, daß in ihr ein Drehfeld durch Mehrphasenstrom erzeugt wird,
die Wicklung (2) hierfür mehrere Phasenteilwicklungen (6u, 6v, 6w) aufweist,
wobei jede Phasenteilwicklung (6u, 6v, 6w) durch wenigstens zwei Spulen gebildet wird, und
wobei jeder Phasenteilwicklung (6u, 6v, 6w) wenigstens zwei der am Ständerumfang angeordneten Leistungselektronikeinheiten (5) zugeordnet sind, die gesondert mit verschiedenen der Spulen (3) der Phasenteilwicklung (6u, 6v, 6w) oder verschiedenen Gruppen (3') von Spulen der Phasenteilwicklung (6u, 6v, 6w) elektrisch verbunden sind, so daß durch eine Leistungselektronikeinheit (5) nur ein Teilstrom des Stroms für eine Phase fließt.

2. Elektrische Maschine nach Anspruch 1, bei welcher die Wicklung (2) Verbindungsköpfe (19) aufweist, und die Leistungselektronikeinheiten (5) stirnseitig im Ständer (17) in einem von den Verbindungsköpfen (19) freigelassenen Raum (20), der radial außerhalb oder innerhalb der Verbindungsköpfe ( 19) liegt, angeordnet sind.

3. Elektrische Maschine, die als Starter, Generator oder als Starter-Generator für ein Kraftfahrzeug ausgebildet ist,
mit einem Ständer (17), der folgendes aufweist:
- eine Wicklung (2),
- längs des Umfangs des Ständers (17) verteilt angeordnete Leistungselektronikeinheiten (5) mit Leistungsschaltern (8),
**dadurch gekennzeichnet, daß**
die Wicklung (2) Verbindungsköpfe (19) aufweist, und
die Leistungselektronikeinheiten (5) stirnseitig im Ständer ( 17) in einem von den Verbindungsköpfen (19) freigelassenen Raum (20), der radial außerhalb oder innerhalb der Verbindungsköpfe (19) liegt, angeordnet sind.

4. Elektrische Maschine nach Anspruch 3, welche so ausgebildet ist, daß in ihr ein Drehfeld durch Mehrphasenstrom erzeugt wird, die Wicklung (2) hierfür mehrere Phasenteilwicklungen (6u, 6v, 6w) aufweist, wobei jede Phasenteilwicklung (6u, 6v, 6w) durch wenigstens zwei Spulen (3) gebildet wird, und wobei jeder Phasenteilwicklung (6u, 6v, 6w) wenigstens zwei der am Ständerumfang angeordneten Leistungselektronikeinheiten (5) zugeordnet sind, die gesondert mit verschiedenen der Spulen (3) der Phasenteilwicklung (6u, 6v, 6w) oder verschiedenen Gruppen (3') der Spulen der Phasenteilwicklung (6u, 6v, 6w) elektrisch verbunden sind, so daß durch eine Leistungselektronikeinheit (5) nur ein Teilstrom des Stroms für eine Phase fließt.

5. Elektrische Maschine nach einem der Ansprüche 1 bis 4, bei welcher die Wicklung (2) eine Formteilwicklung ist.

6. Elektrische Maschine nach Anspruch 5, bei welcher die aus einzelnen Formteilen (38, 39) zusammengesetzten Spulen (3) der Wicklung (2) aus geschichteten Formteil-Verbindungsleitern gebildete Verbindungsköpfe (19) aufweisen, in denen sich Verbindungsleiter mehrerer Spulen (3) überlappen und die sich von einem Ständerkörper (18) in Axialrichtung nach außen erstrecken und so in Radialrichtung außerhalb oder innerhalb einen Freiraum (20) zur Anordnung der Leistungselektronikeinheiten (5) belassen.

7. Elektrische Maschine nach einem der Ansprüche 1 bis 6, bei welcher der Ständer (17) mit Gleichstromschienen (9, 11) ausgerüstet ist, mit denen die längs des Umfangs verteilt angeordneten Leistungselektronikeinheiten (5) elektrisch verbunden sind.

8. Elektrische Maschine nach Anspruch 7, bei welchem die Gleichstromringe (9, 11) in einem von den Verbindungsköpfen (19) freigelassenen Raum (20), in dem sich auch die Leistungselektronikeinheiten (5) befinden, angeordnet sind.

9. Elektrische Maschine nach Anspruch 7 oder 8, bei welcher die die Leistungsschalter (8) darstellenden Bauelemente mit einer Kontaktfläche (23) direkt, ohne zwischengeschaltete elektrische Isolierung auf einem der Gleichstromringe (11) oder einem Spulenabgangsleiter (25) sitzen.

10. Elektrische Maschine nach Anspruch 9, bei welcher die Leiter (11, 25), auf denen die Leistungsschalter-Bauelemente (8) direkt sitzen, thermisch mit einer Wärmesenke gekoppelt sind.

11. Elektrische Maschine nach Anspruch 10, bei welcher die Wärmesenke durch einen Kühlkanal (21) gebildet wird, der zur Kopplung mit einem Kühlkreislauf eines Verbrennungsmotors (43) des Kraftfahrzeugs vorgesehen ist.

12. Elektrische Maschine nach einem der Ansprüche 1 bis 11, bei welcher die Leistungselektronikeinheiten (5) Halbbrücken-Schaltungen (7) aufweisen, die jeweils mit einem Ende einer Spule (3) oder Spulengruppe (3') elektrisch verbunden sind, wobei die anderen Enden der Spulen (3) bzw. Spulengruppen (3') elektrisch miteinander verbunden sind, oder bei welcher die Leistungselektronikeinheiten (5) Vollbrücken-Schaltungen aufweisen.

13. Elektrische Maschine nach einem der Ansprüche 1 bis 12, bei welcher die Leistungselektronikeinheiten (5) außerdem jeweils wenigstens eine Treiberschaltung (13) zur Leistungsschalter-Ansteuerung umfassen.

14. Elektrische Maschine nach Anspruch 12, welche mit einem Bus ( 14) zur Steuerung der Treiberschaltungen (13) ausgerüstet ist.

15. Elektrische Maschine nach einem der Ansprüche 1 bis 14, bei welcher die Leistungselektronikeinheiten (5) außerdem jeweils wenigstens einen Zwischenkreiskondensator (12) umfassen.

16. Elektrische Maschine nach einem der Ansprüche 1 bis 15, welche als Kurbelwellenmaschine oder als mit Eigenlager ausgerüstete Maschine zur Kopplung mit dem Triebstrang des Fahrzeug ausgebildet ist.
